# EUROPEAN PATENT SPECIFICATION

(11) **EP 1 868 396 B1**
(45) Date of publication and mention of the grant of the patent: **29.07.2009**
(21) Application number: 07252431.7
(22) Date of filing: 14.06.2007
(51) Int. Cl.: H04W 28/16

(54) **Method, system and device for allocating channel resources in a trunking service**
Verfahren, System und Vorrichtung für die Zuweisung von Kanalressourcen in einem Bündelfunkdienst
Procédé, système et dispositif d'attribution de ressources de canaux dans un service de circuit

(30) Priority: 15.06.2006 CN 200610087160
(43) Date of publication of application: 19.12.2007
(73) Proprietor: Huawei Technologies Co., Ltd., Longgang District, Shenzhen Guangdong 518129 (CN)
(72) Inventor: Bao, Guoqing, Shenshen 518129, Guangdong (CN)
(74) Representative: Mounteney, Simon James

(56) References cited:
- EP-A- 0 923 255
- US-A1- 2005 141 450
- US-A1- 2006 007 861
- "3rd Generation Partnership Project; Technical Specification Group GSM/EDGE Radio Access Network; Mobile Switching Center - Base Station System (MSC-BSS) Interface; Layer 3 Specification (Release 7)" 3GPP TS 48.008 V7.5.0 (2006-05) TECHNICAL SPECIFICATION, [Online] 12 May 2006 (2006-05-12), pages 1-172, XP002453360 Retrieved from the Internet: URL:http://www.3gpp.org/ftp/Specs/html-inf o/48008.htm> [retrieved on 2007-09-27]

## Description

### Field of the Technology

The present invention relates to trunking communication technologies, and particularly, to a method, system and device for allocating channel resources in a trunking service.

### Background of the Invention

Trunking communication technology is one of relatively economical and flexible communication technologies for management and control developed in recent years. It is widely used in the governmental organizations, energy and transportation enterprises, airports, harbors, fire-fighting police units, water conservancy facilities and military, for satisfying the need of internal communications.

In current trunking services, such as basic Voice Group Call Services (VGCSs) and the Voice Broadcast Services (VBSs), each cell employs an A interface circuit during a group call service. In such a case, a mass of A interface circuit resources will be used when there are a plurality of cells in a trunking group.

In view of the above problem, an A-interface link sharing (including A-interface circuit sharing) is proposed. In the case of A-interface link sharing, a Mobile Switching Center (MSC) sends one VGCS/VBS ASSIGNMENT REQUEST message with respect to all cells belonging to a group call area, and the VGCS/VBS ASSIGNMENT REQUEST message carries a Circuit Identity Code (CIC) and a list of all the cells belonging to the group call area. If the list of the cells does not completely fit into the VGCS/VBS ASSIGNMENT REQUEST message, the remaining part of the list is sent in VGCS/VBS AREA CELL INFO messages. The VGCS/VBS ASSIGNMENT REQUEST message is sent first followed by one or more VGCS/VBS AREA CELL INFO messages until the complete list of the cells has been transferred.

In case of A-interface link sharing, more details can be found in 3GPP 48008-741 specification. In this specification, the MSC controls radio resources allocation mode by including ASSIGNMENT REQUIREMENT (AR) Information Element (IE) in VGCS/VBS ASSIGNMENT REQUEST. Therefore, a Base Station Controller (BSC) allocates radio resources for all the cells served by this BSC, using the radio resources allocation mode indicated by the VGCS/VBS ASSIGNMENT REQUEST. However, in a trunking group, different radio resource allocation modes are in need sometimes because the distribution conditions of the trunking group subscribers in the cells are different. For example, for a cell where the trunking group subscribers appear at a high frequency, the radio resources may be allocated immediately, while for a cell where the trunking group subscribers appear at a low frequency the radio resources may be allocated delayed to save the radio resources.

As above, in the case of A-interface link sharing, the conventional solution makes the radio resources are allocated to all the cells using the same radio resources allocation mode, and therefore, does not meet the demands of various radio resources allocation modes for different cells served by the same BSC.

3GPP TS 48.008 V7.50 specification also discusses that all cells served by a BSS are allocated resources using a same radio resources allocation mode indicated by "Assignment requirement" IE in the VGCS/VBS ASSIGNMENT REQUEST in a service assignment procedure.

### Summary of the Invention

Embodiments of the present invention provide a method, a system and a device for allocating channel resources in a trunking service, to allocate the radio resources to the cells using various radio resources allocation modes in case of A-interface link sharing.

A method for allocating channel resources in a trunking service may include:
determining, by a Mobile Switching Center, a plurality of resources allocation modes for cells served by a Base Station Controller, and sending the resources allocation modes to the BSC;
allocating, by the BSC, channel resources to the cells according to the resources allocation modes.

A trunking communication system may include:
an MSC, configured to determine a plurality of resources allocation modes for cells in a trunking group and served by a BSC, and send the resources allocation modes to the BSC; and
the BSC configured to allocate channel resources to the cells according to the resources allocation modes.

An MSC may include:
a categorizing module, configured to determine a plurality of resources allocation modes for cells in a trunking group and served by a BSC; and
an interface module, configured to send the resources allocation modes employed by the cells to the BSC.

A Base Station Controller, comprising:
a first module, configured to receive a plurality of resources allocation modes for cells in.a trunking group and served by the BSC; and
a second module, configured to allocate channel resources to cells served by the BSC according to the resources allocation modes.

As above, according to the solution for allocating channel resources in a trunking service disclosed by embodiments of the present invention, an MSC may divide cells served by a BSC into categories according to resources allocation modes, and send the resources allocation modes employed by the cells to the BSC; and the BSC may allocate channel resources to the cells according to the resources allocation modes. With the method for categorizing all the cells served by a BSC according to the resources allocation modes employed by the cells in accordance with the embodiments of the present invention, the solution of cells employing the different resources allocation modes enables the MSC to allocate resources to cells employing different resources allocation modes according to their respective resources allocation modes. Therefore, the resources are utilized properly when the Quality of Service is guaranteed, and the problem, which is brought on by all the cells in the same BSC employing a single resources allocation mode in the case of A-interface link sharing, is overcome. Moreover, the solutions have good compatibility with the exiting A-interface sharing method, and therefore, have the potential of being spread and applied widely.

### Brief Description of the Drawings

Fig. 1 shows the flow chart of a resources allocation procedure in accordance with one embodiment of the present invention;
Fig.2 shows a schematic diagram illustrating a trunking communication system in accordance with one embodiment of the present invention.

### Embodiments of the Invention

In one embodiment of the present invention, an MSC divides the cells served by a BSC into categories according to the resources allocation modes and sends the resources allocation modes to the BSC. The BSC allocates channel resources to the cells according to the received resources allocation modes.

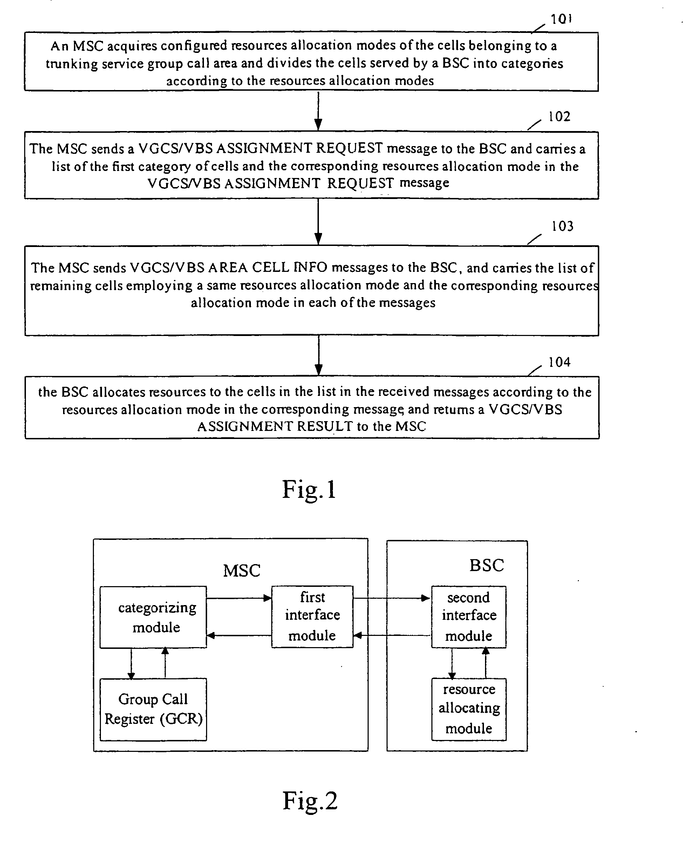

Embodiments are described below to explain the solution for allocating channel resources in a trunking service. Fig.1 shows the flow chart of a resources allocation procedure in accordance with one embodiment of the present invention. In the embodiment, three resources allocation modes are employed by the BSC to allocate channel resources to the cells served by the BSC. The trunking service in this embodiment may be a VGCS or VBS, and accordingly, the corresponding cells may be the cells belonging to a VGCS group call or VBS group call. The channel resources allocation procedure provided by this embodiment may include the following.

Block 101: An MSC acquires configured resources allocation modes of the cells belonging to a trunking service group call area and divides the cells served by a BSC into categories according to the resources allocation modes.

In this Block, the MSC may acquire attribute information of the service group call form the Group Call Register (GCR). The attribute information includes the radio resource allocation modes of the cells. The process of dividing the cells served by the BSC into categories according to the resources allocation modes may include: for example, if that there are three resources allocation modes, regarding the cells employing a first resources allocation mode as a first category of cells, regarding the cells employing a second resources allocation mode as a second category of cells, and regarding the cells employing a third resources allocation mode as a third category of cells. If there are more categories of resources allocation modes, the rest may be deduced by analogy.

The resources allocation mode in the embodiments of the present invention may be a mode of allocating immediately, or a mode of allocating delayed, etc.

Block 102: the MSC selects any one of the categories of cells, such as the first category of cells, sends a VGCSNBS ASSIGNMENT REQUEST message to the BSC and carries a list of the first category of cells and the corresponding resources allocation mode in the VGCS/VBS ASSIGNMENT REQUEST message.

In this Block, the MSC may determine whether the list of the first category of cells is able to completely fit into a VGCSNBS ASSIGNMENT REQUEST message. If the list of the first category of cells is able to completely fit into the VGCSNBS ASSIGNMENT REQUEST message, the MSC sends a VGCSNBS ASSIGNMENT REQUEST message including a Cell Identifier List IE and an ASSIGNMENT REQUIREMENT IE to the BSC. The Cell Identifier List IE carries the list of the first category of cells employing the first category of resources allocation mode and the ASSIGNMENT REQUIREMENT IE carries the first resources allocation mode. If the list of the first category of cells does not completely fit into the VGCS/VBS ASSIGNMENT REQUEST message, the MSC sends a VGCS/VBS ASSIGNMENT REQUEST message including a Cell Identifier List Segment IE and an ASSIGNMENT REQUIREMENT IE to the BSC. The Cell Identifier List Segment IE carries a part of the list of the first category of cells employing the first resources allocation mode and the ASSIGNMENT REQUIREMENT IE carries the first resources allocation mode. Then, the MSC sends a VGCSNBS AREA CELL INFO message including the Cell Identifier List Segment IE and the ASSIGNMENT REQUIREMENT IE to the BSC, wherein the Cell Identifier List Segment IE carries the remaining part of the list of the first category of cells employing the first resources allocation mode and the ASSIGNMENT REQUIREMENT IE carries the first resources allocation mode. In other words, the entire list of the first category of cells in the group call area is communicated to the BSC in a sequence of VGCSNBS AREA CELL INFO messages. Moreover, after the VGCS/VBS ASSIGNMENT REQUEST message is sent, if the remaining part of the list of the first category of cells does not completely fit into the VGCSNBS AREA CELL INFO message, the MSC may further send one or more VGCSNBS AREA CELL INFO messages to the BSC until the complete list of the first category of cells has been transferred.

The coding of the above VGCS/VBS ASSIGNMENT REQUEST message, the VGCS/VBS AREA CELL INFO message and the related IEs are hereinafter described.

The coding of the VGCS/VBS ASSIGNMENT REQUEST message is shown in Table 1. As shown in Table 1, the VGCSNBS ASSIGNMENT REQUEST message contains such IEs as Message Type, Channel Type, Group Call Reference, ASSIGNMENT REQUEST, Cell Identifier List and Cell Identifier List Segment. The ASSIGNMENT REQUEST, Cell Identifier List and Cell Identifier List Segment IEs which are employed in the embodiments of this invention are hereinafter described in detail while other IEs are not described in detail herein.

**Table 1**

| **Information Element** | **REFERENCE** | **DIRECTION** | **TYPE** | **LEN** |
|---|---|---|---|---|
| Message Type | 3.2.2.1 | MSC-BSS | M | 1 |
| Channel Type | 3.2.2.11 | MSC-BSS | M (note 2) | 5-13 |
| Assignment Requirement | 3.2.2.52 | MSC-BSS | M | 2 |
| Cell Identifier | 3.2.2.17 | MSC-BSS | M | 3-10 |
| Group Call Reference | 3.2.2.55 | 1,VISC-BSS | M | 7 |
| Priority | 3.2.2.18 | MSC-BSS | O | 3 |
| Circuit Identity Code | 3.2.2.2 | MSC-BSS | O (note 2) | 3 |
| Downlink DTX Flag | 3.2.2.26 | MSC-BSS | O (note 2) | 2 |
| Encryption Information | 3.2.2.10 | MSC-BSS | O | 3-n |
| VSTK_RAND | 3.2.2.83 | MSC-BSS | O (note 1) | 7 |
| VSTK | 3.2.2.84 | MSC-BSS | O (note 1) | 18 |
| Cell Identifier List (only if segmentation is not used) | 3.2.2.27 | MSC-BSS | O (note 3) | 3+4 to 3+4n |
| Cell Identifier List Segment (only if segmentation is used) | 3.2.2.27a | MSC-BSS | O (note 3) | 4+4 to 4+4n |
| NOTE 1: This information is included for ciphered VGCS/VBS calls. | | | | |
| NOTE 2: If A-interface circuit sharing is used for a given VGCS/VBS call, the MSC shall include the same value for the CIC, Channel Type and Downlink DTX flag in each VGCS/VBS ASSIGNMENT REQUEST message sent for this VGCS/VBS call to a specific BSS. | | | | |
| NOTE 3: In case of A-interface link sharing the Cell Identifier List or List Segment are included to identify the cells of the group call supported by this BSC. | | | | |

The coding of the Assignment Requirement IE in Table 1 is shown in Table 2. This element is used to carry a resources allocation mode. Octet 2 gives the value of this element, which may be 00000000, 00000001, 00000010, etc. 00000000 denotes that resources allocation delay is allowed, 00000001 denotes that resources allocation is immediate and the resources shall not be de-allocated until the end of the call (channel establishment on demand is forbidden by the MSC), and 00000010 denotes that resources allocation is immediate and the resources may further be de-allocated by the BSS (channel establishment on demand is permitted by the MSC).

**Table 2**

| | | | | | | | | |
|---|---|---|---|---|---|---|---|---|
| 8 | 7 | 6 | 6 | 4 | 3 | 2 | 1 | |
| Element identifier | | | | | | | | octet 1 |
| Assignment requirement | | | | | | | | octet 2 |

The coding of the Cell Identifier List and the Cell Identifier List Segment IE in Table 1 are shown in Tables 3 and 4, respectively. The Cell Identifier List IE carries a list of cells if segmentation is not used. The Cell Identifier List IE is used in the case that the list of a same category of cells is able to completely fit into one VGCS/VBS ASSIGNMENT REQUEST message. The Cell Identifier List Segment IE carries a list of cells if segmentation is used. The Cell Identifier List Segment IE is used in the case that the list of a same category of cells does not completely fit into one VGCS/VBS ASSIGNMENT REQUEST message.

**Table 3**

| 8 | 7 | 6 | 5 | 4 | 3 | 2 | 1 | |
|---|---|---|---|---|---|---|---|---|
| Element identifier | | | | | | | | octet 1 |
| Length | | | | | | | | octet 2 |
| Spare | | | | Cell identification discriminator | | | | octet 3 |
| Cell identification 1 | | | | | | | | octet 4-4+m |
| | | | | | | | | |
| Cell identification n | | | | | | | | to 4+nm |

**Table 4**

| 8 | 7 | 6 | 5 | 4 | 3 | 2 | 1 | |
|---|---|---|---|---|---|---|---|---|
| Element identifier | | | | | | | | octet 1 |
| Length | | | | | | | | octet 2 |
| Sequence Length | | | | Sequence Number | | | | octet 3 |
| Spare | | | | Cell identification discriminator | | | | octet 4 |
| Cell identification 1 | | | | | | | | octet 5 |
| | | | | | | | | to |
| Cell identification n | | | | | | | | octet 4+n4 |

As can be seen in Tables 3 and 4, both the Cell Identifier List IE and the Cell Identifier List Segment IE contain the Cell identification and the Cell identification discriminators fields. The Cell identification fields compose the list of corresponding cells. The coding of the Cell identification depends on the value of the Cell identification discriminator. For example, in the case that the values of the cell identification discriminators are 0000, 0001 and 0010, respectively, the coding of the Cell identification are shown in Tables 5a, 5b, 5c and 5d, respectively. When the Cell identification discriminator = 0000, the coding of the Cell identification for GSM 900 and DCS 1800 is shown in Table 5a.

**Table 5a**

| 8 | 7 | 6 | 5 | 4 | 3 | 2 | 1 | |
|---|---|---|---|---|---|---|---|---|
| MCC dig 2 | | | | MCC dig 1 | | | | octet x+1 |
| 1 | 1 | 1 | 1 | MCC dig 3 | | | | octet x+2 |
| MNC dig 2 | | | | MNC dig 1 | | | | octet x+3 |
| LAC | | | | | | | | octet x+4 |
| LAC cont. | | | | | | | | octet x+5 |
| CI value | | | | | | | | octet x+6 |
| CI value cont | | | | | | | | octet x+7 |

When the Cell identification discriminator = 0000, the coding of the Cell identification for PCS 1900 for Network Access (NA) is shown in Table 5b.

**Table 5b**

| 8 | 7 | 6 | 5 | 4 | 3 | 2 | 1 | |
|---|---|---|---|---|---|---|---|---|
| MCC dig 2 | | | | MCC dig I | | | | octet x+1 |
| MNC dig 3 | | | | MCC dig 3 | | | | octet x+2 |
| MNC dig 2 | | | | MNC dig 1 | | | | octet x+3 |
| LAC | | | | | | | | octet x+4 |
| LAC cont. | | | | | | | | octet x+5 |
| CI value | | | | | | | | octet x+6 |
| CI value cont | | | | | | | | octet x+7 |

When the Cell identification discriminator = 0001, the coding of the Cell identification is shown in Table 5c.

**Table 5c**

| 8 | 7 | 6 | 5 | 4 | 3 | 2 | 1 | |
|---|---|---|---|---|---|---|---|---|
| LAC | | | | | | | | octet x+1 |
| LAC cont. | | | | | | | | octet x+2 |
| CI value | | | | | | | | octet x+3 |
| CI value cont | | | | | | | | octet x+4 |

When the Cell identification discriminator = 0010, the coding of the Cell identification is shown as Table 5d.

**Table 5d**

| 8 | 7 | 6 | 5 | 4 | 3 | 2 | 1 | |
|---|---|---|---|---|---|---|---|---|
| CI value | | | | | | | | octet x+1 |
| CI value cont | | | | | | | | octet x+2 |

The coding of the VGCSNBS AREA CELL INFO message in accordance with embodiments of this invention is hereinafter described and shown in Table 6.

**Table 6**

| Information element | REFERENCE | DIRECTION | TYPE | LEN |
|---|---|---|---|---|
| Message Type | 3.2.2.1 | MSC-BSS | M | 1 |
| Cell Identifier List Segment | 3.2.2.27a | MSC-BSS | M | 4+4 to 4+4n |
| Assignment Requirement | 3.2.2.52 | MSC-BSS | M | 2 |

In Table 6, the VGCSNBS AREA CELL INFO message contains Message Type IE, Cell Identifier List Segment IE, and ASSIGNMENT REQUIREMENT IE. The coding of the Cell Identifier List Segment IE is identical to that of the Cell Identifier List Segment IE described above, and the coding of the ASSIGNMENT REQUIREMENT IE is also identical to that of the ASSIGNMENT REQUIREMENT IE described above.

Block 103: the MSC sends a VGCSNBS AREA CELL INFO message to the BSC, and carries the list of all the second category of cells served by the BSC and the second resources allocation mode in this VGCSNBS AREA CELL INFO message. The MSC sends a VGCS/VBS AREA CELL INFO message to the BSC, and carries the list of all the third category of cells served by the BSC and the third resources allocation mode in this VGCS/VBS AREA CELL INFO message. If there are more categories of resources allocation modes, the rest may be deduced by analogy. In other words, the MSC sends VGCS/VBS AREA CELL INFO messages to the BSC, and carries the list of remaining cells employing a same resources allocation mode and the corresponding resources allocation mode in each of the messages.

In this Block, the process of carrying the list of the cells and the corresponding resources allocation mode in the VGCS/VBS AREA CELL INFO message is similar to the process of carrying the list of the first category of cells and the first resources allocation mode in the VGCSNBS AREA CELL INFO message in Block 102. In this Block, the MSC sends VGCSNBS AREA CELL INFO messages containing the Cell Identifier List Segment IE and the ASSIGNMENT REQUIREMENT IE to the BSC. The Cell Identifier List Segment IE carries the list of the second category of cells served by the BSC and the ASSIGNMENT REQUIREMENT IE carries the second resources allocation mode. The MSC also sends VGCS/VBS AREA CELL INFO messages containing the Cell Identifier List Segment IE and the ASSIGNMENT REQUIREMENT IE to the BSC. The Cell Identifier List Segment IE carries the list of the third category of cells served by the BSC and the ASSIGNMENT REQUIREMENT IE carries the third resources allocation mode.

Moreover, if the remaining part of the list of the first category of cells, or the list of the second category of cells, or the list of the third category of cells does not completely fit into one VGCS/VBS AREA CELL INFO message, the MSC may further send one or more VGCS/VBS AREA CELL INFO messages to the BSC until the complete list of the same category of cells has been transferred.

Block 104: the BSC allocates resources to the cells in the list carried in the received messages according to the resources allocation mode in the corresponding message, and returns a VGCS/VBS ASSIGNMENT RESULT to the MSC.

In this Block, allocating channel resources refers to allocating Traffic Channel (TCH) resources. In some cases, the resources allocation mode in the VGCS/VBS AREA CELL INFO message may be invalid. In these cases, to improve the flexibility of the processing, the BSC may determine whether the resources allocation mode in the received VGCS/VBS AREA CELL INFO message is valid. If the resources allocation mode in the received VGCS/VBS AREA CELL INFO message is valid, the BSC allocates resources to the cells in the list carried in the VGCS/VBS AREA CELL INFO message according to the resources allocation mode; otherwise, allocates resources to the cells in the list carried in the VGCS/VBS AREA CELL INFO message according to the resources allocation mode in the VGCS/VBS ASSIGNMENT REQUEST message.

Moreover, to implement the compatibility with the existing trunking system, the ASSIGNMENT REQUIREMENT IE in the VGCS/VBS AREA CELL INFO message may be optional. In other words, the VGCS/VBS AREA CELL INFO message may carry no ASSIGNMENT REQUIREMENT IE. When the BSC determines that the VGCS/VBS AREA CELL INFO message does not carry an ASSIGNMENT REQUIREMENT IE, the BSC allocates resources to the cells in the list carried in the VGCS/VBS AREA CELL INFO message according to the resources allocation mode denoted by the ASSIGNMENT REQUIREMENT IE in the VGCS/VBS ASSIGNMENT REQUEST message.

In the above embodiment, the method for allocating channel resources in a trunking service is described with the example that the cells served by the BSC employ three resources allocation modes and the cells served by the BSC are divided into categories according to the three resources allocation modes. However, in other embodiments, more or less resources allocation modes may be employed. In other embodiments, likewise, the MSC may first carry the list of cells employing a first resources allocation mode in a VGCS/VBS ASSIGNMENT REQUEST message, in which the Assignment Requirement IE denotes the resources allocation mode employed by the cells in the list carried in the message. The MSC then carries the list of the cells employing a second resources allocation mode in a VGCS/VBS AREA CELL INFO message. If there is a third resources allocation mode, the MSC carries the list of the cells employing the third resources allocation mode in another VGCS/VBS AREA CELL INFO message. For the cells employing a same resources allocation mode, if the list of the cells cannot be carried in one VGCS/VBS ASSIGNMENT REQUEST message or in one VGCS/VBS AREA CELL INFO message, the MSC may send another VGCS/VBS AREA CELL INFO message to carry the remaining part of the list of the cells until the complete list of the cells has been transferred to the BSC.

The Embodiment of the present invention describes an example of the method for allocating channel resources in a trunking service, system and below another one embodiment describes a trunking communication system.

As shown in Fig.2, in this embodiment, the trunking system includes an MSC and a BSC. The MSC may include a categorizing module and a first interface module. The categorizing module divides the cells served by the BSC into categories according to the resources allocation modes, and the first interface module sends the resources allocation modes employed by the various categories of cells to the BSC. The BSC may include a second interface module and a resource allocating module. The second interface module receives messages carrying the resources allocation modes from the MSC and the resource allocating module is used for allocating channel resources to the cells according to the received resources allocation modes.

Specifically, the categorizing module first acquires configured resources allocation modes of the cells belonging to a trunking service group call area. The categorizing module may acquire attribute information of the service group call form the GCR. The attribute information includes the radio resource allocation modes of the cells. Next, the categorizing module divides the cells served by the BSC into categories according to the resources allocation modes. For example, if that there are three resources allocation modes, the categorizing module regards the cells employing a first resources allocation mode as a first category of cells, regards the cells employing a second resources allocation mode as a second category of cells, and regards the cells employing a third resources allocation mode as a third category of cells. If there are more categories of resources allocation modes, the rest may be deduced by analogy. The resources allocation mode in the embodiments of the present invention may be a mode of allocating immediately, or a mode of allocating delayed, etc.

The categorizing module sends a VGCS/VBS ASSIGNMENT REQUEST message to the BSC through the first interface module and carries a resources allocation mode and a list of the cells employing the resources allocation mode served by the BSC in the message. For example, the MSC selects any one of the resources allocation modes and sends the selected resources allocation mode and a list of cells employing the resources allocation mode to the second interface module of the BSC, through the first interface module. For example, the MSC selects the first category of cells, sends a VGCS/VBS ASSIGNMENT REQUEST message to the BSC through the first interface module and carries a list of the first category of cells and the corresponding resources allocation mode in the VGCS/VBS ASSIGNMENT REQUEST message.

The categorizing module also sends a VGCS/VBS AREA CELL INFO message to the BSC through the first interface module and carries a second resources allocation mode and a list of the cells employing the second resources allocation mode served by the BSC in the message. For example, the categorizing module sends a VGCS/VBS AREA CELL INFO message to the BSC through the first interface module, and carries the list of all the second category of cells served by the BSC and the corresponding resources allocation mode in the message; sends a VGCS/VBS AREA CELL INFO message to the BSC, and carries the list of all the third category of cells served by the BSC and the corresponding resources allocation mode in the message; and if there are more categories of resources allocation modes, the rest may be deduced by analogy. In other words, the MSC sends VGCS/VBS AREA CELL INFO messages to the BSC, and carries the list of a same category of cells served by the BSC and the corresponding resources allocation mode in each of the messages.

Because the capacity of the octet 2 of the Cell Identifier List IE of a VGCS/VBS ASSIGNMENT REQUEST message is limited, the categorizing module may further include a first determining module to determine whether the list of the first category of cells is able to completely fit into a VGCS/VBS ASSIGNMENT REQUEST message. If the list of the first category of cells is able to completely fit into the VGCS/VBS ASSIGNMENT REQUEST message, the categorizing module sends a VGCS/VBS ASSIGNMENT REQUEST message including a Cell Identifier List IE and an ASSIGNMENT REQUIREMENT IE to the BSC, through the first interface module. The Cell Identifier List IE carries the list of the first category of cells employing the first category of resources allocation mode and the ASSIGNMENT REQUIREMENT IE carries the first resources allocation mode. If the list of the first category of cells does not completely fit into the VGCS/VBS ASSIGNMENT REQUEST message, the categorizing module sends a VGCS/VBS ASSIGNMENT REQUEST message including a Cell Identifier List Segment IE and an ASSIGNMENT REQUIREMENT IE to the BSC, through the first interface module. The Cell Identifier List Segment IE carries a part of the list of the first category of cells employing the first resources allocation mode and the ASSIGNMENT REQUIREMENT IE carries the first resources allocation mode. Then, the categorizing module sends a VGCS/VBS AREA CELL INFO message including the Cell Identifier List Segment IE and the ASSIGNMENT REQUIREMENT IE to the BSC, through the first interface module, wherein the Cell Identifier List Segment IE carries the remaining part of the list of the first category of cells employing the first resources allocation mode and the ASSIGNMENT REQUIREMENT IE carries the first resources allocation mode. In other words, the entire list of the first category of cells in the group call area is communicated to the BSC in a sequence of VGCS/VBS AREA CELL INFO messages. Moreover, if the remaining part of the list of the first category of cells does not completely fit into the VGCS/VBS AREA CELL INFO message, the categorizing module may further send one or more VGCS/VBS AREA CELL INFO messages to the BSC until the complete list of the first category of cells has been transferred.

The implementation of the first interface carrying the list of cells and the corresponding resources allocation mode in a VGCS/VBS AREA CELL INFO message is similar to those in the Blocks 102 and 103 of the embodiment and will not be described herein.

The BSC in this embodiment may include a resource allocating module for allocating channel resources to the cells in the list carried in the received messages according to the resources allocation mode in the corresponding message, The BSC also includes a second interface module for receiving a message carrying a list of cells and the corresponding resources allocation mode from the MSC, sending the received message to the resource allocating module and returning a resource assignment result from the resource allocating module to the MSC.

Allocating channel resources refers to allocating Traffic Channel (TCH) resources. In some cases, the resources allocation mode in the VGCS/VBS AREA CELL INFO message may be invalid. In these cases, to improve the flexibility of the processing, the BSC may further include a second determining module to determine whether the resources allocation mode in the received VGCS/VBS AREA CELL INFO message is valid. If the resources allocation mode in the received VGCS/VBS AREA CELL INFO message is valid, the second determining module notifies the resource allocating module to allocate resources to the cells in the list carried in the VGCS/VBS AREA CELL INFO message according to the resources allocation mode; otherwise, notifies the resource allocating module to allocate resources to the cells in list in the VGCSNBS AREA CELL INFO message according to the resources allocation mode in the VGCS/VBS ASSIGNMENT REQUEST message.

Detailed implementation processes and detailed composing modules of the MSC and BSC in this embodiment may be referred to in the description of the embodiment. It is easy for those skilled in the art to implement the system in accordance with this embodiment according to the detailed description of the embodiment and the detailed implementation process will not be described herein.

An embodiment of the present invention also provides an MSC capable of categorizing cells according to the above resources allocation modes employed by the cells, which enables the MSC to allocate resources to cells employing different resources allocation modes according to their respective resources allocation modes. Therefore, the resources are utilized properly when the Quality of Service is guaranteed, and the problem, which is brought out by all the cells in the same BSC employing a single resources allocation mode in the case of A-interface link sharing, is overcome. Likewise, the MSC in this embodiment may include a categorizing module and an interface module. The categorizing module divides the cells served by the BSC into categories according to the resources allocation modes, and the interface module sends the resources allocation modes employed by the various categories of cells to the BSC.

The categorizing module of the MSC may also include a determining module for determining whether the list of the first category of cells is able to completely fit into a VGCS/VBS ASSIGNMENT REQUEST message. If the list of the first category of does not completely fit into the VGCS/VBS ASSIGNMENT REQUEST message, the categorizing module of the MSC may further sends VGCS/VBS AREA CELL INFO messages to the BSC to carry the remaining part of the list of the first category of cells. Detailed implementation processes and detailed composing modules of the MSC in this embodiment may be referred to in the description of the embodiment. It is easy for those skilled in the art to implement the MSC in accordance with this embodiment according to the detailed description of Figures 1 and 2 and the detailed implementation process will not be described herein.

With the method for categorizing all the cells served by a BSC according to the resources allocation modes employed by the cells in accordance with the embodiments of the present invention, the solution of cells employing the different resources allocation modes enables the MSC to allocate resources to cells employing different resources allocation modes according to their respective resources allocation modes. Therefore, the resources are utilized properly when the Quality of Service is guaranteed, and the problem, which is brought out by all the cells in the same BSC employing a single resources allocation mode in the case of A-interface link sharing, is overcome.

The previous description of the disclosed embodiments is provided to enable those skilled in the art to make or use the present invention. Various modifications to these embodiments will be readily apparent to those skilled in the art and generic principles defined herein may be applied to other embodiments without departing from the scope of the invention as defined in the claims.

## Claims

1. A method for allocating channel resources in a trunking service, comprising:
determining (101), by a Mobile Switching Center, a plurality of resources allocation modes for cells in a trunking group and served by a Base Station Controller, and sending (102, 103) the resources allocation modes to the Base Station Controller; and
allocating (104), by the Base Station Controller, channel resources to the cells according to the plurality of resources allocation modes.

2. A method according to Claim 1, wherein the sending the resources allocation modes to the Base Station Controller comprises:
sending (102, 103) messages to the Base Station Controller, and carrying a list of cells employing a same resources allocation mode and the employed resources allocation mode in each of the messages; and
the allocating channel resources to the cells according to the resources allocation modes comprises:
allocating (104) channel resources to the cells in the list carried in each of the messages according to the resources allocation mode employed by the cells in the list.

3. A method according to Claim 1 or 2, wherein the sending the resources allocation modes to the Base Station Controller comprises:
sending a first message to the Base Station Controller, and carrying a list of cells employing a same resources allocation mode and the employed resources allocation mode in the first message;
sending one or more second messages to the Base Station Controller, and carrying a list of remaining cells employing a same resources allocation mode and the employed resources allocation mode in each of the second message;
the allocating channel resources to the cells according to the resources allocation modes comprises:
allocating channel resources to the cells in the list carried in the first message according to the resources allocation mode in the first message or allocating channel resources to the cells in the list carried in the second message according to the resources allocation mode in the second message.

4. A method according to Claim 3, further comprising:
if the list of cells employing the same resources allocation mode served by the Base Station Controller does not fit into the first message, sending to the Base Station Controller one or more second messages carrying the remaining part of the list of the cells employing the same resources allocation mode and the employed resources allocation mode.

5. A method according to Claim 3 or 4, wherein the allocating channel resources to the cells in the list carried in the first message according to the resources allocation mode in the first message or allocating channel resources to the cells in the list carried in the second message according to the resources allocation mode in the second message comprises:
if the resources allocation mode in the second message is valid, allocating channel resources to the cells in the list carried in the second message according to the resources allocation mode in the second message; if the resources allocation mode in the second message is invalid, allocating channel resources to the cells in the list carried in the first message according to the resources allocation mode in the first message.

6. A method according to Claim 1, wherein the sending the resources allocation modes to the Base Station Controller comprises:
sending a first message to the Base Station Controller, and carrying a list of cells employing a same resources allocation mode and the employed resources allocation mode in the first message;
sending one or more second messages to the Base Station Controller, and carrying a list of remaining cells employing a same resources allocation mode and the employed resources allocation mode in each of the second message;
the allocating channel resources to the cells according to the received resources allocation modes comprises:
allocating channel resources to the cells in the list carried in the second message according to the resources allocation mode in the first message.

7. A method according to Claim 3 to 6, wherein the first message is a Voice Group Call Service, VGCS, ASSIGNMENT REQUEST message and the second message is a VGCS AREA CELL INFO message; or
the first message is a Voice Broadcast Service, VBS, ASSIGNMENT REQUEST message, and the second message is a VBS AREA CELL INFO message; and
wherein the VGCS ASSIGNMENT REQUEST message contains a Cell Identifier List Information Element, IE, and an ASSIGNMENT REQUIREMENT IE, the Cell Identifier List IE carries the list of cells employing the same resources allocation mode, and the ASSIGNMENT REQUIREMENT IE carries the employed resources allocation mode;
the VGCS AREA CELL INFO message contains a Cell Identifier List Segment IE and an ASSIGNMENT REQUIREMENT IE; the Cell Identifier List Segment IE carries the list of the remaining cells employing the same resources allocation mode, or the remaining part of the list of cells employing the same resources allocation mode, and the ASSIGNMENT REQUIREMENT IE carries the employed resources allocation mode; and
the VBS ASSIGNMENT REQUEST message contains a Cell Identifier List Information Element (IE) and an ASSIGNMENT REQUIREMENT IE, the Cell Identifier List IE carries the list of cells employing the same resources allocation mode, and the ASSIGNMENT REQUIREMENT IE carries the employed resources allocation mode;
the VBS AREA CELL INFO message contains a Cell Identifier List Segment IE and an ASSIGNMENT REQUIREMENT IE; the Cell Identifier List Segment IE carries the list of the remaining cells employing the same resources allocation mode, or the remaining part of the list of cells employing the same resources allocation mode, and the ASSIGNMENT REQUIREMENT IE carries the employed resources allocation mode

8. A trunking communication system, comprising:
a Mobile Switching Center, configured to determine a plurality of resources allocation modes for cells in a trunking group and served by a Base Station Controller, and send the resources allocation modes to the Base Station Controller; and
the Base Station Controller configured to allocate channel resources to the cells according to the resources allocation modes.

9. A system according to Claim 8, wherein the Mobile Switching Center comprises a categorizing module, configured to determine a plurality of resources allocation modes for cells served by a Base Station Controller; and an interface module, configured to send the resources allocation modes employed by the cells to the Base Station Controller.

10. A system according to Claim 8, wherein the Base Station Controller comprises a first module, configured to receive a plurality of resources allocation modes; and
a second module, configured to allocate channel resources to cells served by the Base Station Controller according to the resources allocation modes.

11. A system according to Claim 9 and 10, wherein the interface module comprises a first message sending module configured to send messages to the Base Station Controller, and carry a list of cells employing a same resources allocation mode and the employed resources allocation mode in each of the messages; and
the second module comprises a first allocating module configured to allocate channel resources to the cells in the list carried in each of the messages according to the resources allocation mode employed by the cells in the list.

12. A system according to Claim 9 and 10, wherein the interface module further comprises a second message sending module configured to send a first message to the Base Station Controller, carry the list of cells employing the same resources allocation mode and the employed resources allocation mode in the first message; send one or more second messages to the Base Station Controller, and carry a list of remaining cells employing the same resources allocation mode and the employed resources allocation mode in each of the second message; and
the second module comprises a second allocating module configured to allocate channel resources to the cells in the list carried in the first message according to the resources allocation mode in the first message or allocate channel resources to the cells in the list carried in the second message according to the resources allocation mode in the second message.

13. A system according to Claim 9 and 10, wherein the Mobile Switching Center comprises one or more units configured to send a first message to the Base Station Controller, carry the list of cells employing the same resources allocation mode and the employed resources allocation mode in the first message; send one or more second messages to the Base Station Controller, and carry a list of remaining cells employing the same resources allocation mode and the employed resources allocation mode in each of the second message; and
the Base Station Controller is configured to allocate channel resources to the cells in the list carried in the second message according to the resources allocation mode in the first message.

14. A system according to any of Claims 11 to 13, wherein the second module further comprises a third allocating module configured to allocate channel resources to the cells in the list carried in the one or more second messages according to the resources allocation mode in the first message.

15. A Mobile Switching Center, comprising:
a categorizing module, configured to determine a plurality of resources allocation modes for cells in a trucking group and served by a Base Station Controller;
an interface module, configured to send the resources allocation modes employed by the cells to the Base Station Controller.

16. A Mobile Switching Center according to Claim 15, wherein the interface module comprises a first message sending module configured to send messages to the Base Station Controller, and carry a list of cells employing a same resources allocation mode and the employed resources allocation mode in each of the messages.

17. A Mobile Switching Center according to Claim 15, wherein the interface module comprises a second message sending module configured to send a first message to the Base Station Controller, carry the list of the cells employing the same resources allocation mode and the employed resources allocation mode in the first message; and
send one or more second messages to the Base Station Controller, and carry a list of remaining cells employing the same resources allocation mode and the employed resources allocation mode in each of the second message.

18. A Mobile Switching Center according to Claim 15, 16 or 17, wherein the interface module further comprises a third message sending module configured to send one or more second messages to the Base Station Controller, and carry the remaining part of the list of the cells employing the same resources allocation mode and the employed resources allocation mode in the second messages.

19. A Base Station Controller, comprising:
a first module, configured to receive a plurality of resources allocation modes for cells in a trunking group and served by the Base Station Controller, and
a second module, configured to allocate channel resources to the cells served by the Base Station Controller according to the resources allocation modes.

20. A Base Station Controller according to claim 19, wherein the first module comprises a first receiving module configured to receive messages, each of the messages carries a list of cells employing a same resources allocation mode and the employed resources allocation mode; and
the second module comprises a first allocating module configured to allocate channel resources to the cells in the list carried in each of the messages according to the resources allocation mode employed by the cells in the list.

21. A Base Station Controller according to claim 19 or 20, wherein the first module further comprises a second receiving module configured to receive a first message carrying the list of cells employing the same resources allocation mode and the employed resources allocation mode; and receive one or more second messages carrying a list of remaining cells employing the same resources allocation mode and the employed resources allocation mode in each of the second messages; and
the second module further comprises a second allocating module configured to allocate channel resources to the cells in the list carded in the second messages according to the resources allocation mode in the first message.

## Patentansprüche

1. Verfahren für die Zuweisung von Kanalressourcen in einem Bündelknkdienst, umfassend:
Bestimmen (101), durch eine Mobilvermittlungsstelle, einer Vielzahl von Ressourcenzuweisungsmodi für Zellen in einer Bündelgruppe, die durch einen Basisstationscontroller bedient werden, und Senden (102, 103) der Ressourcenzuweisnugsmodi an den Basisstationscontroller; und
Zuweisen (104) von Kanalressourcen an die Zellen durch den Basisstationscontroller gemäß der Vielzahl von Ressourcenzuweisungsmodi.

2. Verfahren nach Anspruch 1, worin das Senden der Ressourcenzuweisungsmodi an den Basisstationscontroller umfasst:
Senden von Nachrichten an den Basisstationscontroller (102, 103) und Tragen einer Liste denselben Ressourcenzuweisungsmodus benutzender Zellen und des benutzten Ressourcenzuweisungsmodus in jeder der Nachrichten; und
das Zuweisen von Kanalressourcen an die Zellen gemäß den Ressourcenzuweisungsmodi umfasst:
Zuweisen (104) von Kanalressourcen an die Zellen in der Liste, die in jeder der Nachrichten gemäß dem durch die Zellen in der Liste benutzten Ressourcenzuweisungsmodus getragen wird.

3. Verfahren nach Anspruch 1 oder 2, worin das Senden der Ressourcenzuweisungsmodi an den Basisstationscontroller Folgendes umfasst:
Senden einer ersten Nachricht an den Basisstationscontroller und Tragen einer Liste denselben Ressourcenzuweisungsmodus benutzender Zellen und des benutzten Ressourcenzuweisungsmodus in der ersten Nachricht;
Senden einer oder mehrerer zweiter Nachrichten an den Basisstationscontroller und Tragen einer Liste restlicher denselben Ressourcenzuweisungsmodus benutzender Zellen und des benutzten Ressourcenzuweisungsmodus in jeder der zweiten Nachrichten;
das Zuweisen von Kanalressourcen an die Zellen gemäß den Ressourcenzuweisuugsmodi umfasst:
Zuweisen von Kanalressourcen an die Zellen in der in der ersten Nachricht getragenen Liste gemäß dem Ressourcenzuweisungsmodus in der ersten Nachricht oder Zuweisen von Kanalressourcen an die Zellen in der in der zweiten Nachricht getragenen Liste gemäß dem Ressourcenzuweisungsmodus in der zweiten Nachricht.

4. Verfahren nach Anspruch 3, außerdem umfassend:
falls die Liste denselben Ressourcenzuweisungsmodus benutzender Zellen, die vom Basisstationscontroller bedient werden, nicht in die erste Nachricht passt, werden dem Basisstationscontroller eine oder mehrere zweite Nachrichten gesendet, die den restlichen Teil der Liste der denselben Ressourcenzuweisungsmodus benutzenden Zellen und den benutzten Ressourcenzuweisungsmodus tragen,

5. Verfahren nach Anspruch 3 oder 4, worin das Zuweisen von Kanalressourcen an die Zellen in der Liste, die in der ersten Nachricht gemäß dem Ressourcenzuweisungsmodus in der ersten Nachricht getragen wird, oder das Zuweisen von Kanalressourcen an die Zellen in der Liste, die in der zweiten Nachricht gemäß dem Ressourcenzuweisungsmodus in der zweiten Nachricht getragen wird, Folgendes umfasst:
falls der Ressourcenzuweisungsmodus in der zweiten Nachricht gültig ist, Zuweisen von Kanalressourcen an die Zellen in der Liste, die in der zweiten Nachricht gemäß dem Ressourcenzuweisungsmodus in der zweiten Nachricht getragen wird; falls der Ressourcenzuweisungsmodus in der zweiten Nachricht ungültig ist, Zuweisen von Kanalressourcen an die Zellen in der Liste, die in der ersten Nachricht gemäß dem Ressourcenzuweisungsmodus in der ersten Nachricht getragen wird.

6. Verfahren nach Anspruch 1, worin das Senden der Ressourcenzuweisungsmodi an den Basisstationscontroller umfasst:
Senden einer ersten Nachricht an den Basisstationscontroller und Tragen einer Liste denselben Ressourcenzuweisungsmodus benutzender Zellen und des benutzten Ressourcenzuweisungsmodus in der ersten Nachricht;
Senden einer oder mehrerer zweiter Nachrichten an den Basisstationscontroller und Tragen einer Liste restlicher denselben Ressourcenzuweisungsmodus benutzender Zellen und des benutzten Ressourcenzuweisungsmodus in jeder der zweiten Nachrichten;
das Zuweisen von Kanalressourcen an die Zellen gemäß den empfangenen Ressourcenzuweisungsmodi umfasst:
Zuweisen von Kanalressourcen an die Zellen in der in der zweiten Nachricht getragenen Liste gemäß dem Ressourcenzuweisungsmodus in der ersten Nachricht.

7. Verfahren nach Anspruch 3 bis 6, worin die erste Nachricht eine Sprachgruppen-Rufdienst, VGCS, ASSIGNMENT REQUEST Nachricht ist und die zweite Nachricht eine VGCS AREA CELL INFO Nachricht ist; oder
die erste Nachricht eine Sammelrufdienst, VBS, ASSIGNMENT REQUEST Nachricht ist und die zweite Nachricht eine VBS AREA CELL INFO Nachricht ist; und
worin die VGCS ASSIGNMENT REQUEST Nachricht ein Zellenidentifiziererlisten-Informationselement, IE, und ein ASSIGNMENT REQUIREMENT IE enthält, das Zellenidentifiziererlisten-IE die Liste denselben Ressourcenzuweisungsmodus benutzender Zellen trägt und das ASSIGNMENT REQUIREMENT IE den benutzten Ressourcenzuweisungsmodus trägt;
die VGCS AREA CELL INFO Nachricht enthält ein Zellenidentifizierer-Listensegment-IE und ein ASSIGNMENT REQUIREMENT IE; das Zellenidentifizierer-Listensegment-IE trägt die Liste der restlichen denselben Ressourcenzuweisungsmodus benutzenden Zellen oder den restlichen Teil der Liste denselben Ressourcenzuweisungsmodus benutzender Zellen, und das ASSIGNMENT REQUIREMENT IE trägt den benutzten Ressourcenzuweisungsmodus; und
die VBS ASSIGNMENT REQUEST Nachricht enthält ein Zellenidentifiziererlisten-Informationselement, IE, und ein ASSIGNMENT REQUIREMENT IE; das Zellenidentifiziererlisten-IE trägt die Liste denselben Ressourcenzuweisungsmodus benutzender Zellen, und das ASSIGNMENT REQUIREMENT IE trägt den benutzten Ressourcenzuweisungsmodus,
die VBS AREA CELL INFO Nachricht enthält ein Zellenidentifizierer-Listensegment-IE und ein ASSIGNMENT REQUIREMENT IE; das Zellenidentifizierer-Listensegment-IE trägt die Liste der restlichen denselben Ressourcenzuweisungsmodus benutzenden Zellen oder den restlichen Teil der Liste denselben Ressourcenzuweisungsmodus benutzender Zellen, und das ASSIGNMENT REQUIREMENT IE trägt den benutzten Ressourcenzuweisungsmodus.

8. Bündelkommunikationssystem, umfassend:
eine Mobilvermittlungsstelle, die dazu konfiguriert ist, eine Vielzahl von Ressourcenzuweisungsmodi für Zellen in einer Bündelgruppe zu bestimmen, die durch einen Basisstationscontroller bedient werden, und die Ressourcenzuweisungsmodi an den Basisstationscontroller zu senden; und
den Basisstationscontroller, der dazu konfiguriert ist, den Zellen gemäß den Ressourcenzuweisungsmodi Kanalressourcen zuzuteilen.

9. System nach Anspruch 8, worin die Mobilvermittlungsstelle ein Kategorisierungsmodul umfasst, das dazu konfiguriert ist, eine Vielzahl von Ressourcenzuweisungsmodi für Zellen zu bestimmen, die von einem Basisstationscontroller bedient werden; und ein Schnittstellenmodul, das dazu konfiguriert ist, die von den Zellen benutzten Ressourcenzuweisungsmodi an den Basisstationscontroller zu senden.

10. System nach Anspruch 8, worin der Basisstationscontroller ein erstes Modul umfasst, das dazu konfiguriert ist, eine Vielzahl von Ressourcenzuweisungsmodi zu empfangen; und
ein zweites Modul, das dazu konfiguriert ist, Kanalressourcen an Zellen zuzuweisen, die durch den Basisstationscontroller gemäß den Ressourcenzuweisungsmodi bedient werden.

11. System nach Anspruch 9 und 10, worin das Schnittstellenmodul eine erstes Nachrichtensendemodul umfasst, das dazu konfiguriert ist, Nachrichten an den Basisstationscontroller zu senden und eine Liste denselben Ressourcenzuweisungsmodus benutzender Zellen und den benutzten Ressourcenzuweisungsmodus in jeder der Nachrichten zu tragen; und
das zweite Modul ein erstes Zuweisungsmodul umfasst, das dazu konfiguriert ist, Kanalressourcen den Zellen in der Liste zuzuteilen, die in jeder der Nachrichten gemäß dem von den Zellen in der Liste benutzten Ressourcenzuweisungsmodus getragen wird.

12. System nach Anspruch 9 und 10, worin das Sehnittstellenmodul außerdem ein zweites Nachsichtensendemodul umfasst, das dazu konfiguriert ist, eine erste Nachricht an den Basisstationscontroller zu senden, die Liste denselben Ressourcenzuweisungsmodus benutzender Zellen und den benutzten Ressourcenzuweisungsmodus in der ersten Nachricht zu tragen; eine oder mehrere zweite Nachrichten an den Basisstationscontroller zu senden und eine Liste restlicher denselben Ressourcenzuweisungsmodus benutzender Zellen und den benutzten Ressourcenzuweisungsmodus in jeder der zweiten Nachrichten zu tragen; und
das zweite Modul ein zweites Zuweisungsmodul umfasst, das dazu konfiguriert ist, Kanalressourcen den Zellen in der Liste zuzuweisen, die in der ersten Nachricht gemäß dem Ressourcenzuweisungsmodus in der ersten Nachricht getragen wird, oder Kanalressourcen den Zellen in der Liste zuzuweisen, die in der zweiten Nachricht gemäß dem Ressourcenzuweisungsmodus in der zweiten Nachricht getragen wird.

13. System nach Anspruch 9 und 10, worin die Mobilvermittlungsstelle eine oder mehrere Einheiten umfasst, die dazu konfiguriert sind, eine erste Nachricht an den Basisstationscontroller zu senden, die Liste denselben Ressourcenzuweisungsmodus benutzender Zellen und den benutzten Ressourcenzuweisungsmodus in der ersten Nachricht zu tragen; einen oder mehrere zweite Nachrichten an den Basisstationscontroller zu senden und eine Liste restlicher denselben Ressourcenzuweisungsmodus benutzender Zellen und den benutzten Ressourcenzuweisungsmodus in jeder der zweiten Nachrichten zu tragen; und
der Basisstatianscontroller dazu konfiguriert ist, Kanalressourcen den Zellen in der Liste zuzuweisen, die in der zweiten Nachricht gemäß dem Ressourcenzuweisungsmodus in der ersten Nachricht getragen wird.

14. System nach einem der Ansprüche 11 bis 13, worin das zweite Modul außerdem ein drittes Zuweisungsmodul umfasst, das dazu konfiguriert ist, Kanalressourcen den Zellen in der Liste zuzuweisen, die in der einen oder den mehreren zweiten Nachrichten gemäß dem Ressourcenzuweisungsmodus in der ersten Nachricht getragen wird.

15. Mobilvermittlungsstelle, umfassend:
ein Kategorisierungsmodul, das dazu konfiguriert ist, eine Vielzahl von Ressourcenzuweisungsmodi für Zellen in einer Bündelgruppe zu bestimmen, die durch einen Basisstationscontroller bedient werden;
ein Schnittstellenmodul, das dazu konfiguriert ist, die von den Zellen benutzten Ressourcenzuweisungsmodi an den Basisstationscontroller zu senden.

16. Mobilvermittlungsstelle nach Anspruch 15, worin das Schnittstellenmodul ein erstes Nachrichtensendemodul umfasst, das dazu konfiguriert ist, Nachrichten an den Basisstationscontroller zu senden und eine Liste denselben Ressourcenzuweisungsmodus benutzender Zellen und den benutzten Ressourcenzuweisungsmodus in jeder der Nachrichten zu tragen.

17. Mobilvermittlungsstelle nach Anspruch 15, worin das Schnittstellenmodul ein zweites Nachrichtensendemodul umfasst, das dazu konfiguriert ist, eine erste Nachricht an den Basisstationscontroller zu senden und die Liste denselben Ressourcenzuweisungsmodus benutzender Zellen und den benutzten Ressourcenzuweisungsmodus in der ersten Nachricht zu tragen; und
Senden von einer oder mehreren zweiten Nachrichten an den Basisstationscontroller und Tragen einer Liste restlicher denselben Ressourcenweisungsmodus benutzender Zellen und des benutzten Ressourcenzuweisungsmodus in jeder der zweiten Nachrichten.

18. Mobilvermittlungsstelle nach Anspruch 15, 16, oder 17, worin das Schnittstellenmodul außerdem ein drittes Nachrichtensendemodul umfasst, das dazu konfiguriert ist, eine oder mehrere zweite Nachrichten an den Basisstationscontroller zu senden, und den restlichen Teil der Liste denselben Ressourcenzuweisungsmodus benutzender Zellen und den benutzten Ressourcenzuweisungsmodus in den zweiten Nachrichten zu tragen.

19. Basisstationscontroller, umfassend:
ein erstes Modul, das dazu konfiguriert ist, eine Vielzahl von Ressourcenzuweisungsmodi für Zellen in einer Bündelgruppe zu empfangen, die vom Basisstationscontroller bedient werden; und
ein zweites Modul, das dazu konfiguriert ist, Kanalressourcen den vom Basisstationscontroller bedienten Zellen gemäß den Ressourcenzuweisungsmodi zuzuweisen.

20. Basisstationscontroller nach Anspruch 19, worin das erste Modul ein erstes Empfangsmodul umfasst das dazu konfiguriert ist, Nachrichten zu empfangen, wobei jede der Nachrichten eine Liste denselben Ressourcenzuweisungsmodus benutzender Zellen und den benutzten Ressourcenzuweisungsmodus trägt; und
das zweite Modul ein erstes Zuweisungsmodul umfasst, das dazu konfiguriert ist, Kanalressourcen den Zellen in der in jeder der Nachrichten getragenen Liste gemäß dem von den Zellen in der Liste benutzten Ressourcenzuweisungsmodus zuzuweisen.

21. Basisstationscontroller nach Anspruch 19 oder 20, worin das erste Modul außerdem ein zweites Empfangsmodul umfasst, das dazu konfiguriert ist, eine erste Nachricht zu empfangen, die die Liste denselben Ressourcenzuweisungsmodus benutzender Zellen und den benutzten Ressourcenzuweisungsmodus trägt; und Empfang einer oder mehrerer zweiter Nachrichten, die eine Liste denselben Ressourcenzuweisungsmodus benutzender restlicher Zellen und den benutzten Ressourcenzuweisungsmodus in jeder der zweiten Nachrichten trägt; und
das zweite Modul außerdem ein zweites Zuweisungsmodul umfasst, das dazu konfiguriert ist, kanalressourcen den Zellen in der in den zweiten Nachrichten getragenen Liste gemäß dem Ressourcenzuweisungsmodus in der ersten Nachricht zuzuweisen.

## Revendications

1. Procédé pour affecter des ressources de canal dans un service de mise en commun, comprenant les étapes ci-dessous consistant à ;
déterminer (101), par le biais d'un centre de commutation du service mobile, une pluralité de modes d'affectation de ressources pour des cellules, dans un groupe de mise en commun, et desservies par un contrôleur de station de base, et transmettre (102, 103) les modes d'affectation de ressources au contrôleur de station de base ; et
affecter (104), par le biais du contrôleur de station de base, des ressources de canal aux cellules selon la pluralité de modes d'affectation de ressources.

2. Procédé selon la revendication 1, dans lequel l'étape consistant à envoyer les modes d'affectation de ressources au contrôleur de station de base comporte les étapes ci-dessous consistant à :
envoyer (102, 103) des messages au contrôleur de station de base, et transporter une liste de cellules employant un même mode d'affectation de ressources et le mode employé d'affectation de ressources dans chacun des messages ; et
l'étape consistant à affecter des ressources de canal aux cellules selon les modes d'affectation de ressources comporte l'étape ci-dessous consistant à :
affecter (104) des ressources de canal aux cellules dans la liste transportée dans chacun des messages selon le mode d'affectation de ressources employé par les cellules dans la liste.

3. Procédé selon la revendication 1 ou 2, dans lequel l'étape consistant à envoyer les modes d'affectation de ressources au contrôleur de station de base comporte les étapes ci-dessous consistant à :
envoyer un premier message au contrôleur de station de base, et transporter une liste de cellules employant un même mode d'affectation de ressources et le mode employé d'affectation de ressources dans le premier message ;
envoyer un ou plusieurs seconds messages au contrôleur de station de base, et transporter une liste de cellules restantes employant un même mode d'affectation de ressources et le mode employé d'affectation de ressources employé dans chaque second message ;
l'étape consistant à affecter des ressources de canal aux cellules selon les modes d'affectation de ressources comporte les étapes ci-dessous consistant à :
affecter des ressources de canal aux cellules dans la liste transportée dans le premier message selon le mode d'affectation de ressources dans le premier message, ou affecter des ressources de canal aux cellules dans la liste transportée dans le second message selon le mode d'affectation de ressources dans le second message.

4. Procédé selon la revendication 3, comprenant en outre l'étape ci-dessous consistant à :
si la liste des cellules employant le même mode d'affectation de ressources desservies par le biais du contrôleur de station de base ne peut pas être totalement contenue dans le premier message, envoyer, au contrôleur de station de base, un ou plusieurs seconds messages transportant la partie restante de la liste des cellules employant le même mode d'affectation de ressources et le mode employé d'affectation de ressources.

5. Procédé selon la revendication 3 ou 4, dans lequel l'étape consistant à affecter des ressources de canal aux cellules dans la liste transportée dans le premier message selon le mode d'affectation de ressources dans le premier message, ou à affecter des ressources de canal aux cellules dans la liste transportée dans le second message selon le mode d'affectation de ressources dans le second message, comporte les étapes ci-dessous consistant à :
si le mode d'affectation de ressources dans le second message est valide, affecter des ressources de canal aux cellules dans la liste transportée dans le second message selon le mode d'affectation de ressources dans le second message ; si le mode d'affectation de ressources dans le second message est non valide, affecter des ressources de canal aux cellules dans la liste transportée dans le premier message selon le mode d'affectation de ressources dans le premier message.

6. Procédé selon la revendication 1, dans lequel l'étape consistant à envoyer les modes d'affectation de ressources au contrôleur de station de base comporte les étapes ci-dessous consistant à :
envoyer un premier message au contrôleur de station de base, et transporter une liste de cellules employant un même mode d'affectation de ressources et le mode employé d'affectation de ressources dans le premier message ;
envoyer un ou plusieurs seconds messages au contrôleur de station de base, et transporter une liste des cellules restantes employant un même mode d'affectation de ressources et le mode employé d'affectation de ressources dans chaque second message ;
l'étape consistant à affecter des ressources de canal aux cellules selon les modes d'affectation de ressources reçus comporte les étapes ci-dessous consistant à :
affecter des ressources de canal aux cellules dans la liste transportée dans le second message selon le mode d'affectation de ressources dans le premier message.

7. Procédé selon l'une quelconque des revendications 3 à 6, dans lequel le premier message est un message de DEMANDE D'AFFECTATION DE SERVICE VGCS (Voice Group Call Service, service vocal d'appel de groupie), et le second message est un message D'INFORMATION DE CELLULE DE ZONE DE SERVICE VGCS ; ou
le premier message est un message de DEMANDE D'AFFECTATION DE SERVICE VBS (Voice Broadcast Service, service de diffusion vocale), et le second message est un message D'INFORMATION DE CELLULE DE ZONE DE SERVICE VBS ; et
dans lequel le message de DEMANDE D'AFFECTATION DE SERVICE VGCS contient un élément d'information, IE, de liste d'identifiants de cellule, et un élément IE D'EXIGENCE D'AFFECTATION, l'élément IE de liste d'identifiants de cellule transporte la liste des cellules employant le même mode d'affectation de ressources, et l'élément IE D'EXIGENCE D'AFFECTATION transporte le mode employé d'affectation de ressources ;
le message D'INFORMATION DE CELLULE DE ZONE DE SERVICE VGCS contient un élément IE de segment de liste d'identifiants de cellule et un élément IE D'EXIGENCE D'AFFECTATION ; l'élément IE de segment de liste d'identifiants de cellule transporte la liste des cellules restantes employant le même mode d'affectation de ressources, ou la partie restante de la liste des cellules employant le même mode d'affectation de ressources, et l'élément IE D'EXIGENCE D'AFFECTATION transporte le mode employé d'affectation de ressources ; et
le message de DEMANDE D'AFFECTATION DE SERVICE VBS contient un élément d'information (IE) de liste d'identifiants de cellule et un élément IE D'EXIGENCE D'AFFECTATION, l'élément IE de liste d'identifiants de cellule transporte la liste des cellules employant le même mode d'affectation de ressources, et l'élément IE D'EXIGENCE D'AFFECTATION transporte le mode employé d'affectation de ressources ;
le message D'INFORMATION DE CELLULE DE ZONE DE SERVICE VBS contient un élément IE de segment de liste d'identifiants de cellule et un élément IE D'EXIGENCE D'AFFECTATION ; l'élément IE de segment de liste d'identifiants de cellule transporte la liste des cellules restantes employant le même mode d'affectation de ressources, ou la partie restante de la liste de cellules employant le même mode d'affectation de ressources, et l'élément IE D'EXIGENCE D'AFFECTATION transporte le mode employé d'affectation de ressources.

8. Système de communication de mise en commun, comprenant;
un centre de commutation du service mobile, configuré de manière à déterminer une pluralité de modes d'affectation de ressources pour des cellules dans un groupe de mise en commun et desservies par un contrôleur de station de base, et à envoyer les modes d'affectation de ressources au contrôleur de station de base, et
le contrôleur de station de base configuré de manière à affecter des ressources de canal aux cellules selon les modes d'affectation de ressources,

9. Système selon la revendication 8, dans lequel le centre de commutation du service mobile comporte un module de catégorisation, configuré de manière à déterminer une pluralité de modes d'affectation de ressources pour des cellules desservies par un contrôleur de station de base, et un module d'interface, configuré de manière à envoyer les modes d'affectation de ressources employés par les cellules au contrôleur de station de base.

10. Système selon la revendication 8, dans lequel le contrôleur de station de base comporte
un premier module, configuré de manière à recevoir une pluralité de modes d'affectation de ressources ; et
un deuxième module, configuré de manière à affecter des ressources de canal à des cellules desservies par le contrôleur de station de base selon les modes d'affectation de ressources.

11. Système selon les revendications 9 et 10, dans lequel le module d'interface comporte un premier module d'envoi de message configuré de manière à envoyer des messages au contrôleur de station de base, et à transporter une liste des cellules employant un même mode d'affectation de ressources et le mode employé d'affectation de ressources dans chacun des messages ; et
le deuxième module comporte un premier module d'affectation configuré de manière à affecter des ressources de canal aux cellules dans la liste transportée dans chacun des messages selon le mode d'affectation de ressources employé par les cellules dans la liste.

12. Système selon les revendications 9 et 10, dans lequel le module d'interface comporte en outre un deuxième module d'envoi de message configuré de manière à envoyer un premier message au contrôleur de station de base, à transporter la liste des cellules employant le même mode d'affectation de ressources et le mode employé d'affectation de ressources dans le premier message ; à envoyer un ou plusieurs seconds messages au contrôleur de station de base, et à transporter une liste des cellules restantes employant le même mode d'affectation de ressources et le mode employé d'affectation de ressources dans chaque second message ; et
le deuxième module comporte un deuxième module d'affectation configuré de manière à affecter des ressources de canal aux cellules dans la liste transportée dans le premier message selon le mode d'affectation de ressources dans le premier message ou à affecter des ressources de canal aux cellules dans la liste transportée dans le second message selon le mode d'affectation de ressources dans le second message.

13. Système selon les revendication 9 et 10, dans lequel le centre de commutation du service mobile comporte une ou plusieurs unités configurées de manière à envoyer un premier message au contrôleur de station de base, à transporter la liste des cellules employant le même mode d'affectation de ressources et le mode employé d'affectation de ressources dans le premier message ; à envoyer un ou plusieurs seconds messages au contrôleur de station de base, et à transporter une liste des cellules restantes employant le même mode d'affectation de ressources et le mode employé d'affectation de ressources dans chaque second message ; et
le contrôleur de station de base est configuré de manière à affecter des ressources de canal aux cellules dans la liste transportée dans le second message selon le mode d'affectation de ressources dans le premier message.

14. Système selon l'une quelconque des revendications 11 à 13, dans lequel le deuxième module comporte en outre un troisième module d'affectation configuré de manière à affecter des ressources de canal aux cellules dans la liste transportée dans ledit un ou lesdits plusieurs seconds messages selon le mode d'affectation de ressources dans le premier message.

15. Centre de commutation du service mobile, comprenant:
un module de catégorisation, configuré de manière à déterminer une pluralité de modes d'affectation de ressources pour des cellules dans un groupe de mise en commun et desservies par un contrôleur de station de base ;
un module d'interface, configuré de manière à envoyer les modes d'affectation de ressources employés par les cellules au contrôleur de station de base.

16. Centre de commutation du service mobile selon la revendication 15, dans lequel le module d'interface comporte un premier module d'envoi de message configuré de manière à envoyer des messages au contrôleur de station de base, et à transporter une liste des cellules employant un même mode d'affectation de ressources et le mode employé d'affectation de ressources dans chacun des messages.

17. Centre de commutation du service mobile selon la revendication 15, dans lequel le module d'interface comporte une deuxième module d'envoi de message configuré de manière à envoyer un premier message au contrôleur de station de base, à transporter la liste des cellules employant le même mode d'affectation de ressources et le mode employé d'affectation de ressources dans le premier message ; et
à envoyer un ou plusieurs seconds messages au contrôleur de station de base, et à transporter une liste des cellules restantes employant le même mode d'affectation de ressources et le mode employé d'affectation de ressources dans chaque second message.

18. Centre de commutation du service mobile selon l'une quelconque des revendications 15, 16 ou 17, dans lequel le module d'interface comporte en outre un troisième module d'envoi de message configuré de manière envoyer un ou plusieurs seconds messages au contrôleur de station de base, et à transporter la partie restante de la liste des cellules employant le même mode d'affectation de ressources et le mode employé d'affectation de ressources dans les seconds messages.

19. Contrôleur de station de base, comprenant :
un premier module, configuré de manière à recevoir une pluralité de modes d'affectation de ressources pour des cellules dans un groupe de mise en commun et desservies par le contrôleur de station de base ; et
un deuxième module, configuré de manière à affecter des ressources de canal aux cellules desservies par le contrôleur de station de base selon les modes d'affectation de ressources.

20. Contrôleur de station de base selon la revendication 19, dans lequel le premier module comporte un premier module de réception configure de manière à recevoir des messages, chacun des messages transporte une liste des cellules employant un même mode d'affectation de ressources et le mode employé d'affectation de ressources ; et
le deuxième module comporte un premier module d'affectation configuré de manière à affecter des ressources de canal aux cellules de la liste transportée dans chacun des messages selon le mode d'affectation de ressources employé par les cellules dans la liste.

21. Contrôleur de station de base selon la revendication 19 ou 20, dans lequel le premier module comporte en outre un deuxième module de réception configuré de manière à recevoir un premier message transportant la liste des cellules employant le même mode d'affectation de ressources et le mode employé d'affectation de ressources, et à recevoir un ou plusieurs seconds messages transportant une liste des cellules restantes employant le même mode d'affectation de ressources et le mode employé d'affectation de ressources dans chacun des seconds messages ; et
le deuxième module comporte en outre un deuxième module d'affectation configuré de manière à affecter des ressources de canal aux cellules dans la liste transportée dans les seconds messages selon le mode d'affectation de ressources dans le premier message.
